**Europäisches Patentamt**

**European Patent Office**

**Office européen des brevets**

(11) Numéro de publication : **0 369 854 B1**

(12) **FASCICULE DE BREVET EUROPEEN**

(45) Date de publication du fascicule du brevet :
**30.08.95 Bulletin 95/35**

(21) Numéro de dépôt : **89403047.7**

(22) Date de dépôt : **06.11.89**

(51) Int. Cl.⁶ : **G06T 7/20**

(54) **Procédé et circuit de traitement par bloc de signal bidimensionnel d'images animées.**

(30) Priorité : **09.11.88 FR 8814639**

(43) Date de publication de la demande :
**23.05.90 Bulletin 90/21**

(45) Mention de la délivrance du brevet :
**30.08.95 Bulletin 95/35**

(84) Etats contractants désignés :
**DE ES GB IT NL SE**

(56) Documents cités :
**EP-A- 0 181 215**
**EP-A- 0 276 434**

(73) Titulaire : **FRANCE TELECOM**
**6, Place d'Alleray**
**F-75505 Paris Cedex 15 (FR)**

(72) Inventeur : **Artieri, Alain**
**7 allée des Eyminées**
**F-38240 Meylan (FR)**
Inventeur : **Jutand, Francis**
**167, rue E. Dolet**
**F-94230 Cachan (FR)**

(74) Mandataire : **Fort, Jacques**
**CABINET PLASSERAUD**
**84, rue d'Amsterdam**
**F-75009 Paris (FR)**

**EP 0 369 854 B1**

## Description

L'invention concerne le traitement de signal bidimensionnel représentant des images animées, dans le but de réduire le volume de données à transmettre ou à stocker pour représenter ces images. Elle trouve une application particulièrement importante dans le domaine des installations de visiophone et de video-conférence qui posent le problème de la transmission d'une image de qualité acceptable à l'aide d'un débit de données faible, par exemple de 64 kbit par seconde pour une transmission sur voie téléphonique.

De nombreuses propositions ont déjà été faites pour réduire le débit requis. Certaines de ces propositions utilisent la corrélation spatiale à l'intérieur de l'image. Parmi les techniques envisageables, la transformée en cosinus discrète (TCD) dans les boucles de codage semble particulièrement intéressante.

On a également déjà proposé de profiter de la corrélation temporelle entre images successives. La solution habituellement utilisée consiste à transmettre, au lieu de signaux représentant individuellement les pixels successifs de l'image, la différence entre le signal d'image courante et un prédicteur qui est une estimation du signal au point considéré.

On a notamment utilisé, comme prédicteur d'un pixel dans l'image courante, la valeur du signal représentant le même pixel dans la trame précédente. Mais ce mode de codage inter-images ne tient pas compte de ce que des parties appréciables de l'image peuvent être en mouvement global.

Des procédés plus avantageux tiennent compte du mouvement, ce qui implique une estimation du mouvement dans les diverses parties de l'image. Le procédé d'estimation de mouvement qui semble le plus intéressant est la technique dite de "correspondance bloc à bloc" ou "block matching". L'image est découpée en blocs de taille prédéterminée. Pour chaque bloc de l'image courante, on recherche le bloc le plus similaire, dans une fenêtre englobant le bloc dans l'image précédente. On calcule, pour chaque bloc, le vecteur déplacement faisant correspondre ce bloc le plus similaire au bloc de l'image courante et on le transmet au décodeur.

On peut par exemple rechercher, pour des blocs de 8*8 de l'image actuelle, le bloc le plus proche dans une fenêtre de 23*23 pixels.

A priori, il semble que la puissance de calcul requise dans ce cas, correspondant à environ 1,6 x 10$^9$ opérations par seconde pour des images au format CIF (Common Intermediate Format), exige des circuits d'une complexité telle que la solution n'est pas viable EP-A-0 276 434 décrit un circuit de traitement dans lequel une partie des calculs ci-dessus est exécutée en parallèle : une distorsion globale entre deux blocs donnés d'image successives est déterminée en calculant simultanément toutes les distorsions élémentaires entre pixels correspondants des blocs. Ceci veut dire que , pour que les calculs parallèles puissent commencer, il est nécessaire que les valeurs de tous les pixels du bloc en question aient été reçues. L'invention vise notamment à fournir un procédé de traitement d'image, ainsi qù'un circuit permettant de le mettre en oeuvre, permettant d'arriver à une complexité acceptable pour un calcul en temps réel.

La revendication 1 décrit un tel procédé, tandis qu'un circuit le mettant en oeuvre est défini par la revendication 4.

Le procédé et le circuit suivant l'invention telle que revendiquée sont transposables à la télévision à haute définition qui, pour être compatible avec les bandes passantes disponibles, exige que soit effectuée une compression de signal. Le vecteur déplacement obtenu pour chaque bloc par le procédé et le circuit conformes à l'invention peut alors être transmis en tant que données d'assistance permettant de reconstituer approximativement des trames (ou des images) non transmises.

Une originalité importante du circuit revendiqué est que les pixels du bloc courant sont distribués chacun à leur tour à toutes les voies de calcul, les pixels de la fenêtre de recherche circulent et les sommes partielles sont fixes en position.

L'invention sera mieux comprise à la lecture de la description qui suit d'un mode particulier de réalisation, donné à titre d'exemple non limitatif. La description se réfère aux dessins qui l'accompagnent, dans lesquels :

- la Figure 1 est un schéma montrant un bloc de 4 pixels d'image courante et une fenêtre de recherche associée,
- la Figure 2 est un schéma de balayage bloc "par colonne" utilisable pour la mise en oeuvre de l'invention,
- la Figure 3, similaire à la Figure 2, montre un mode de balayage bloc "par colonne" constituant une variante de celui de la Figure 1 et particulièrement bien adapté à la mise en oeuvre de l'invention,
- les Figures 4A, 4B, 4C et 4D sont des schémas montrant les cycles successifs d'une séquence de recherche de correspondance optimale de bloc dans une fenêtre de recherche,
- la Figure 5 est un diagramme montrant un exemple de calcul de minimum ;
- la Figure 6 est un schéma montrant un mode d'utilisation de lignes à retard pour appliquer les signaux nécessaires à un circuit d'estimation de mouvement ;
- la Figure 7 montre un mode de balayage possible de fenêtres de recherche, dans le cas où H=3M ;
- la Figure 8 est un synoptique de processeurs de base, permettant de constituer une matrice de calcul;

- la Figure 9 montre la constitution générale d'un dispositif suivant l'invention ;
- la Figure 10 montre une variante possible de réalisation ;
- la Figure 11 est un chronogramme des signaux primaires de séquencement du dispositif ;
- la Figure 12, similaire à la Figure 8, montre une variante de réalisation mettant en oeuvre des processeurs fonctionnant en temps partagé.

Avant de décrire un mode particulier de réalisation de l'invention, il peut être utile de rappeler le principe de l'estimation de mouvement par correspondance bloc à bloc.

L'image à traiter est fractionnée en blocs ayant chacun une taille M∗N, M désignant le nombre de lignes et N le nombre de pixels sur une ligne. Pour chaque bloc d'une image courante, on recherche le bloc présentant la meilleure corrélation avec lui, c'est-à-dire qui lui est le plus similaire, dans l'image précédente (ou une autre image antérieure) en limitant la recherche à une fenêtre de taille H∗L. Pour cela on calcule une fonction de distorsion associée à chaque déplacement possible permettant de faire correspondre le bloc M∗N de l'image courante à l'un des blocs de même taille de la fenêtre H∗L, repéré par un vecteur de composantes (i,j) et on détermine celui des déplacements qui conduit au minimum de distorsion.

La fonction de distorsion est une fonction à deux arguments ; la plus significative est la fonction d'intercorrélation. Mais elle est compliquée à calculer et conduit à une complexité de calcul en général trop importante. Pour cette raison, on utilise avantageusement une fonction de distorsion D(i,j) plus simple, de la forme :

$$D(i,j) = \sum_{m=1}^{M} \sum_{n=1}^{N} d(x_{m,n}; y_{m+i,n+j}) \qquad (1)$$

On utilise habituellement la fonction $d(x,y) = |x-y|$ ou $d(x,y) = (x-y)^2$. On se bornera par la suite à considérer le cas de $d(x,y) = |x-y|$ : on retient dans ce cas, comme bloc de la fenêtre de recherche le plus proche du bloc de l'image courante, celui pour lequel D est minimum.

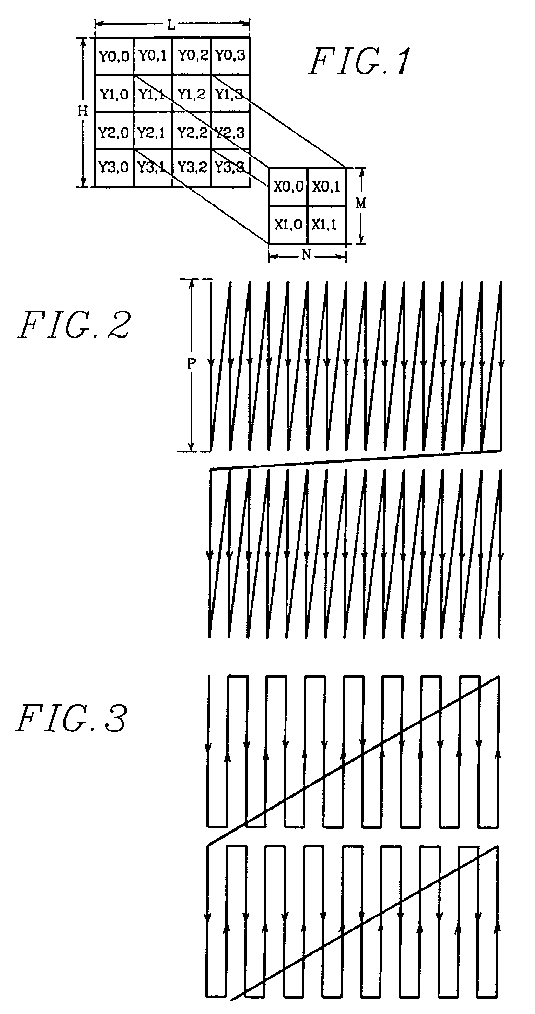

Sur la Figure 1, M = N = 2 c'est-à-dire que chaque bloc d'image courante comporte 4 pixels x0,0, ..., x1,1 ; H = L = 4 c'est-à-dire que chaque fenêtre de recherche comporte 16 pixels y0,0, ..., y3,3. Dans ce cas, on doit calculer (H-M+1) (L-N+1) = 9 distorsions, le calcul de chaque distorsion impliquant N∗M calculs de valeur absolue et N∗M accumulations, ce qui correspond à 2NM(H-M+1) (L-N+1) opérations par bloc. Comme, en temps réel, un bloc est transmis point par point en N∗M cycles, il faut donc disposer d'un circuit de calcul permettant de réaliser 2(H-M+1) (L-N+1) opérations par cycle, c'est-à-dire d'une puissance de calcul qui ne dépend pas de la taille M∗N du bloc mais uniquement du nombre de déplacements possibles de ce bloc dans la fenêtre de recherche.

L'invention utilise notamment cette propriété dans le choix qui est fait du mode de calcul. Conformément à l'invention, les calculs correspondant à tous les déplacements possibles du bloc M∗N dans la fenêtre sont effectués en parallèle, le nombre de cycles de calcul, et lui seul, dépendant de la taille du bloc.

Classiquement, on utilise le balayage dit "vidéo" pour la transmission des images de télévision et plus généralement des images analysées point par point : chaque ligne complète est balayée à son tour, un intervalle de suppression ligne étant prévu entre deux lignes successives. Le procédé suivant l'invention utilise un mode différent de balayage, qu'on peut appeler "balayage bloc par colonne", qui permet de simplifier notablement l'architecture des circuits de calcul.

La Figure 2 montre un premier exemple d'un tel type de balayage qui a l'avantage de ne fixer que la taille M de bloc. L'image est balayée par bandes successives dont la hauteur est une fraction entière de la hauteur de l'image et est égale à la hauteur d'un bloc ou à une fraction simple (par exemple la moitié) de cette hauteur M. La raison de ce dernier choix est la suivante : si on choisit, pour un bloc de hauteur M (M désignant un nombre pair de lignes), une hauteur de bande P = M/2 et que l'on prenne H = 2M, les points à comparer dans le bloc de l'image courante et dans le "halo" de la fenêtre de l'image précédente au-dessus et au-dessous du bloc courant sont rendus plus directement disponibles par ce type de balayage.

La Figure 3 montre une variante du balayage bloc par colonne qui est encore plus avantageuse que la précédente. Elle n'est pas directement compatible avec le calcul de TCD. Mais la transformation d'un mode de balayage en un autre peut s'effectuer de façon très simple, à l'aide d'un registre de capacité suffisante pour contenir une colonne du bloc. Si la transmission par lignes de l'image s'effectue par balayage classique de type vidéo, une conversion d'entrée, avant traitement d'image proprement dit, peut être effectuée en utilisant une mémoire de capacité égale à P lignes de l'image, P étant la hauteur de bande du balayage de bloc.

Pour plus de clarté, la mise en oeuvre du procédé suivant l'invention sera tout d'abord décrite en se limitant au cas de blocs et de fenêtres du genre montré en Figure 1. La généralisation du procédé est immédiate, le nombre de voies de calcul étant dans tous les cas égal au nombre de déplacements possibles tandis que le nombre de cycles de la séquence élémentaire du procédé, pour chaque bloc, est dans tous les cas égal à 2M, quelle que soit la valeur de N, la séquence élémentaire étant répétée autant de fois que nécessaire jusqu'au déroulement de M*N cycles.

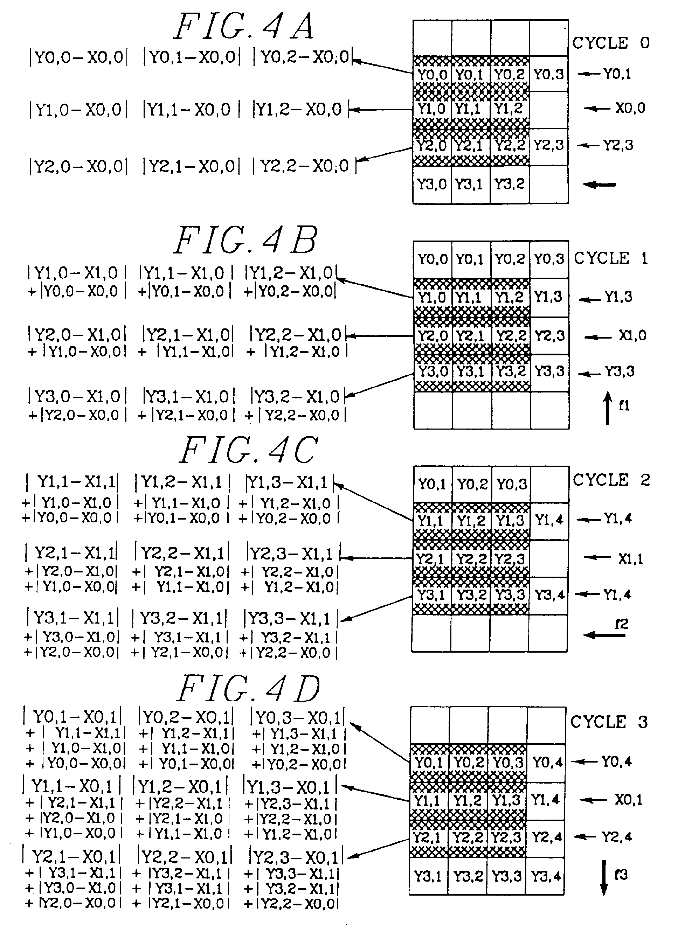

Les Figures 4A à 4D illustrent respectivement les cycles 0, 1, 2 et 3 de calcul. Au cours de chaque cycle, 9 calculs sont effectués en parallèle, pour déterminer la distorsion pour toutes les correspondances possibles, mais sur un seul à la fois des pixels x0,0 ; x0,1 ; x1,0 ; x1,1 du bloc courant et les pixels appropriés de la fenêtre de recherche de l'image précédente (Figure 1). A chaque cycle, toutes les voies reçoivent le ou les paramètres représentatifs du même point $x_{m,n}$ , avec m $\in$ (0,1) et n $\in$ (0,1), et toutes les voies travaillent en parallèle pour calculer chacune le terme partiel $d(x_{m,n}, y_{m+i,n+j})$ des neuf distorsions globales, termes correspondant aux neuf calculs de distorsion partielle faisant intervenir $x_{m,n}$.

Les seules opérations nécessaires sur les points de la fenêtre de recherche sont alors des décalages (d'une position vers le haut, d'une position vers le bas et d'une position vers la gauche dans le cas où M = N = 2). Les opérations arithmétiques se limitent à des soustractions et des accumulations ; et on verra que l'amenée des données définissant les pixels de la fenêtre n'implique aucune complication des entrées.

Dans l'exemple montré sur les Figures 4A à 4D, les opérations effectuées au cours des quatre cycles sont les suivantes.

Cycle 0 (Figure 4A)

La donnée (brillance par exemple) représentative du point x0,0 est distribuée à toutes les voies de calcul en parallèle, qui seront matérialisées chacune par un processeur. Chacune des voies calcule et mémorise le terme $d(x_{0,0}, y_{i,j})$ relatif à la position (i,j) qui est associée à la voie de calcul (où $0 \leq i \leq 3$ et $0 \leq j \leq 3$).

La partie gauche de la Figure 4A montre les 9 résultats qui apparaissent simultanément et correspondent aux distorsions respectives entre les points y0,0 ; ... ; y2,2 et le point x0,0.

Cycle 1 (Figure 4B)

Au cours du cycle 1 on effectue en parallèle le calcul des neuf termes $d(x_{1,0}, y_{1+i,j})$. Pour cela chacune des voies de calcul doit recevoir le point de la fenêtre de recherche situé immédiatement au-dessous de celui qui a été utilisé au cours du cycle 0. En d'autres termes, il faut effectuer un décalage de tous les points de la fenêtre de recherche d'une position vers le haut, comme indiqué par la flèche f1, avant de calculer la distorsion correspondant aux neuf possibilités.

Au cours du même cycle 1, d'une part on calcule la distorsion partielle correspondant au déplacement et on l'ajoute à celle du cycle 0 par accumulation, comme cela est montré à la partie gauche de la Figure 4B.

Cycle 2 (Figure 4C)

Le cycle 2 correspond au calcul de toutes les distorsions pour le point x1,1 : chaque processeur calcule donc un des termes $d(x_{1,1}, y_{1+i,1+j})$. On effectue donc un décalage de tous les points de la fenêtre de recherche d'une position vers la gauche (flèche f2) avant de calculer les distorsions partielles qu'on accumule avec les distorsions précédentes (partie gauche de la Figure 4C).

Cycle 3 (Figure 4D)

Au cours du cycle 3, on effectue le même calcul qu'au cours du cycle 2 mais sur x0,1, ce qui conduit à décaler tous les points de la fenêtre de recherche d'une position vers le bas (flèche f3). Chaque distorsion partielle calculée est ajoutée au résultat partiel correspondant pour chacun des décalages possibles ; on obtient en conséquence la distorsion globale pour l'ensemble du bloc correspondant à chacun des neuf décalages possibles.

On peut alors passer à la détermination du minimum parmi les neuf distorsions et du vecteur définissant le déplacement qui fait correspondre un bloc de l'image courante au bloc de l'image précédente pour lequel la distorsion est minimale.

Les opérations montrées sur les Figures 4A à 4D sont avantageusement effectuées à l'aide d'un circuit comprenant une matrice de 3*3 processeurs constituant chacun une voie et chacun capable de stocker la donnée représentative d'un point de la fenêtre de recherche et le résultat de la distorsion correspondant à un déplacement et des registres supplémentaires pour stocker des points de la fenêtre amenés au cours de chaque cycle, utilisés dans le calcul non pas au cours de ce cycle, mais lors du cycle de calcul suivant.

Si on considère les parties en grisé sur les Figures 4a à 4d ci-jointes comme représentant les processeurs requis, on voit que les transferts de données en dehors des périodes d'initialisation sont les suivants :

- Au début du cycle 0, les données y0,0 à y2,2 sont déjà disponibles dans les processeurs du fait de la séquence de cycles précédente ; x0,0 est distribué à tous les processeurs, y0,3 et y2,3 sont appliqués sur les entrées de la matrice et mémorisés dans des registres d'entrée.
- Au début du cycle 1 la donnée x1,0 est distribuée à tous les processeurs ; les données y1,3 et y3,3 sont introduites dans les registres d'entrée : ces registres d'entrée contiennent alors la totalité de la colonne suivante de la fenêtre de recherche. Le contenu y des processeurs est décalé d'une position vers le haut (flèche f1).
- Au cours du cycle 2 la donnée x1,1 est distribuée à tous les processeurs et les points de la fenêtre de recherche sont décalés d'une position vers la gauche (flèche f2). En même temps les données y1,4 et y3,4 sont introduites dans les registres d'entrée correspondant.
- Enfin, au cours du cycle 3 où la donnée x0,1 est distribuée et la fenêtre est décalée vers le bas (flèche f3), les données y0,4 et y2,4 sont introduites : on dispose donc des données y requises pour amorcer la séquence de cycles correspondant au bloc suivant de l'image courante.

La détermination du minimum de D se fait en deux phases.

1. Au cours de la première phase, les distorsions mémorisées sont décalées vers un bord de la matrice et envoyées vers une colonne d'opérateurs, un opérateur étant affecté au calcul du minimum d'une ligne de distorsions.

On supposera d'abord que le décalage intervient vers la gauche, ce qui correspond au cas illustré en Figure 4A.

Au premier cycle chaque opérateur reçoit alors une distorsion correspondant au déplacement horizontal le plus à gauche possible du bloc M∗N, c'est-à-dire, dans le cas illustré, un déplacement de -1 vers la gauche.

Chaque opérateur mémorise la distorsion D et le déplacement en x associé.

Au second cycle, chaque opérateur reçoit la distorsion suivante et la compare à la distorsion mémorisée : si la nouvelle distorsion est plus faible, il la mémorise ainsi que le déplacement associé, égal au déplacement du cycle précédent incrémenté de 1 : il suffit d'un compteur pour déterminer le déplacement.

La même opération est encore répétée jusqu'à ce que toutes les distorsions possibles aient été appliquées à la colonne d'opérateurs, chaque opérateur contient alors le minimum de distorsions de chaque ligne et le déplacement associé.

2. La deuxième phase consiste à déterminer le minimum de distorsions mémorisées dans les opérateurs : la démarche découle directement de la précédente.

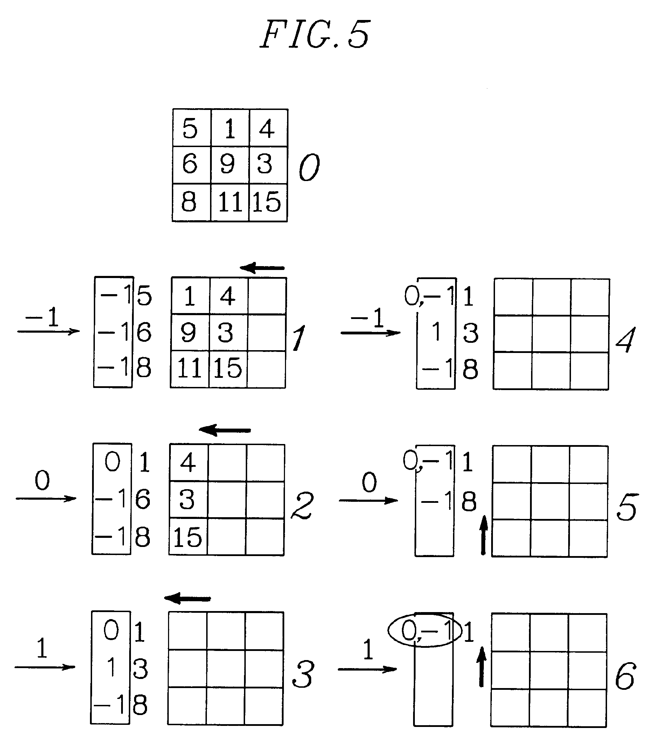

Un exemple est donné en Figure 5 pour faire mieux comprendre comment le minimum et le vecteur associé sont déterminés : sur cette Figure, l'étape zéro est constituée par la détermination de la matrice des distorsions, obtenue par le procédé déjà décrit et montré en Figures 4A-4D. On voit que le minimum de distorsion vaut 1 et correspond à la position (0, -1). La première phase décrite ci-dessus correspond aux étapes 1, 2 et 3 de la Figure 5. La deuxième phase, c'est-à-dire la recherche du minimum minimorum est constituée par les étapes 4, 5 et 6.

On décrira maintenant un circuit constituant un mode de mise en oeuvre possible du procédé qui vient d'être décrit, en supposant que le mode de balayage adopté est le balayage par colonne modifié schématisé en Figure 3. On supposera encore que les blocs ont une dimension M∗N et que la fenêtre de recherche a une dimension H∗L. Et on désignera par K l'entier égal ou supérieur (avantageusement immédiatement supérieur) à M/H.

Comme le montrent les Figures 4A à 4D, il faut amener les valeurs du point d'une colonne complète de la fenêtre de recherche pendant le temps consacré à traiter une colonne d'un bloc : avec M = 2 et H = 4, il faut K =2 entrées pour amener les points de la fenêtre de recherche.

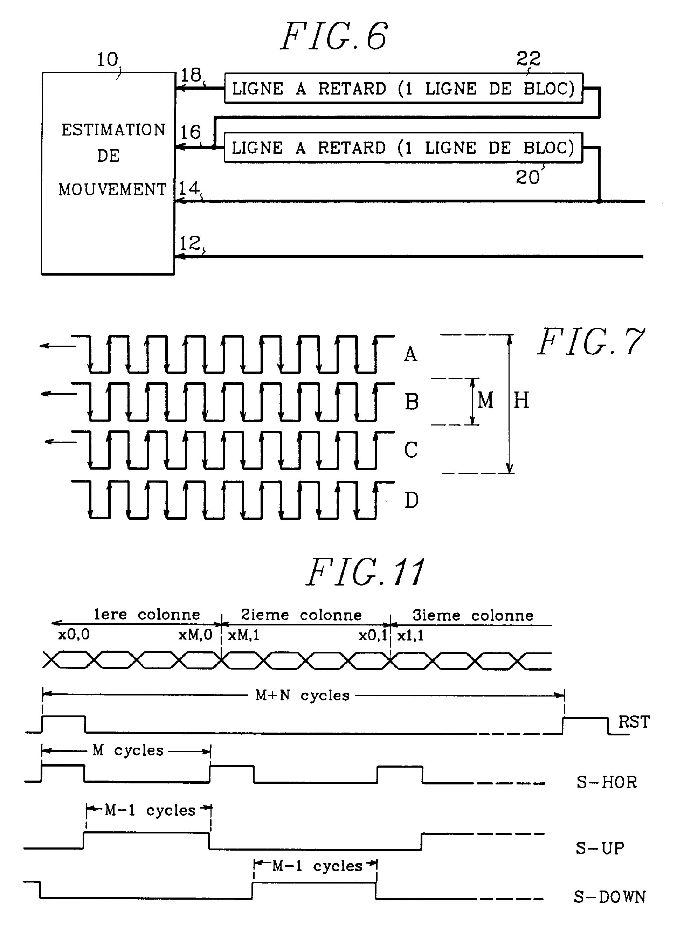

L'exemple donné sur les Figures 6 et 7 correspond par contre à K = 3, ce qui correspond par exemple à des blocs 8∗8 et une fenêtre de recherche 23∗23.

Le module d'estimation de mouvement 10 reçoit alors sur une entrée 12 les valeurs X des points de l'image courante. Pour traiter les blocs de la bande B de l'image courante (Figure 7), le module d'estimation de mouvement 10 doit disposer des pixels des trois bandes A, B et C de l'image précédente. Pour cela, les trois entrées 14, 16 et 18 du module d'estimation de mouvement 10 reçoivent respectivement les signaux de l'image précédente de la bande de blocs C immédiatement au-dessous de la bande de blocs B, les signaux de l'image précédente de la bande de blocs B (bande de même position dans l'image précédente que la bande B de l'image courante) obtenue par l'intermédiaire d'une ligne à retard 20 d'une capacité égale à une bande de blocs et enfin les signaux de i'image précédente de la bande de blocs A immédiatement au-dessus de la bande de blocs B, obtenue par l'intermédiaire d'une ligne à retard 22 identique à la ligne à retard 20. En résumé, les entrées 12 et 16 correspondent aux mêmes pixels, avec un décalage d'une image dans le temps ; les entrées 14 et 16 correspondent aux mêmes pixels avec un décalage d'une bande de blocs dans le temps.

Une fois le traitement de la bande de blocs B terminé, le traitement de la bande de blocs C de l'image courante peut commencer : on fournit alors au module 10 les pixels des bandes de blocs B, C et D de l'image précédente (Figure 7).

Le coeur du module d'estimation du mouvement 10 est constitué par une matrice de (H-M+1) lignes ayant chacune (L-N+1) processeurs, destinés chacun à calculer une distorsion. La position qu'occupe le processeur dans la matrice correspond au déplacement du bloc dans la fenêtre de recherche pour lequel la distorsion est calculée.

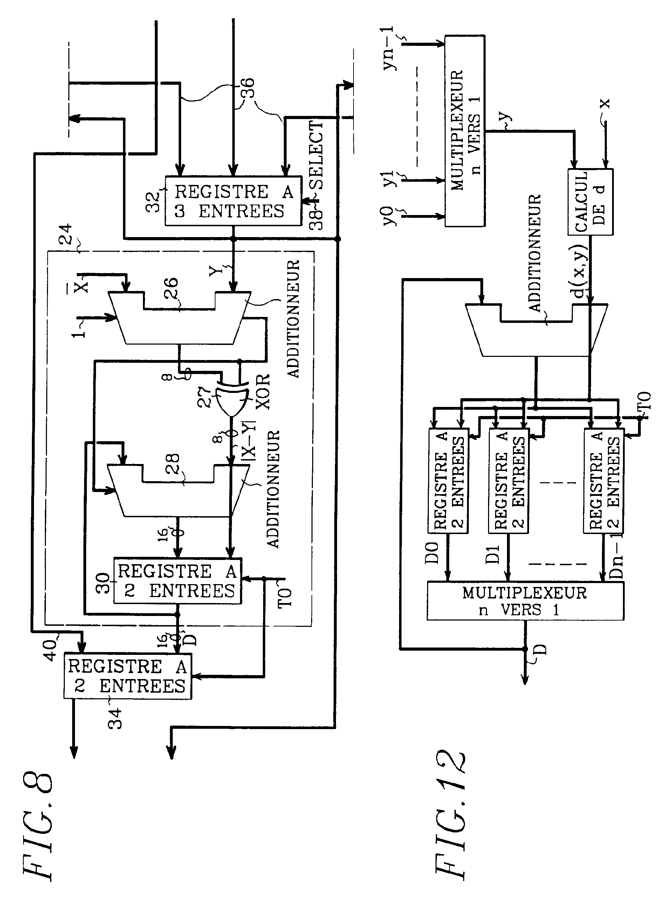

Chacun des processeurs du module 10 peut avoir la constitution montrée schématiquement en Figure 8 dans le cas où d(X,Y) est la valeur absolue de la différence. X est une donnée commune à tous les processeurs, amenée par une entrée commune, et Y est une donnée locale spécifique à chaque processeur. Le processeur peut être regardé comme comprenant un circuit de calcul de distorsion 24, un registre d'entrée 32 et un registre de sortie 34.

Le circuit de calcul 24 comprend un additionneur 26 qui reçoit la donnée commune X et la donnée locale Y associée à un circuit OU EXCLUSIF 28 qui permet de déterminer $|X-Y|$ et fournit cette valeur à l'une des entrées d'un accumulateur constitué d'un additionneur 28 et d'un registre 30. La seconde entrée de l'additionneur reçoit une donnée rebouclée de la sortie du registre 30. La sortie de l'additionneur et $|X-Y|$ sont appliquées sur les deux entrées du registre 30 qui accumule les distorsions partielles. La sortie du registre étant réappliquée à l'entrée de l'additionneur 28, D apparaît à la sortie du registre 30 à l'issue de tous les cycles de calcul. Une entrée d'initialisation T0 permet de remettre l'accumulateur à zéro à l'issue de chaque opération de traitement d'un bloc.

Le registre d'entrée 32 permet de récupérer une nouvelle donnée Y provenant soit du processeur placé au-dessus dans la matrice, soit du processeur placé au-dessous, soit du processeur placé à droite. Il comporte pour cela trois entrées 36 et une entrée de sélection 38.

Le registre de sortie 34 mémorise soit la distorsion contenue dans l'accumulateur constitué de l'additionneur 28 et du registre 30 du circuit de calcul 24 (ce transfert se faisant pendant le cycle d'initialisation de l'accumulateur lors du signal T0), soit le contenu du registre de sortie du processeur 24 situé à droite du processeur considéré. Pour cela le registre 34 comporte une entrée recevant la distorsion D, une entrée 40 recevant le contenu du registre du processeur situé à droite et une entrée de commande recevant la synchronisation To.

On peut notamment utiliser des données codées sur 8 bits, les composants de l'accumulateur étant alors prévus pour traiter des mots de 16 bits et donc accumuler jusqu'à 256 distorsions partielles sans débordement.

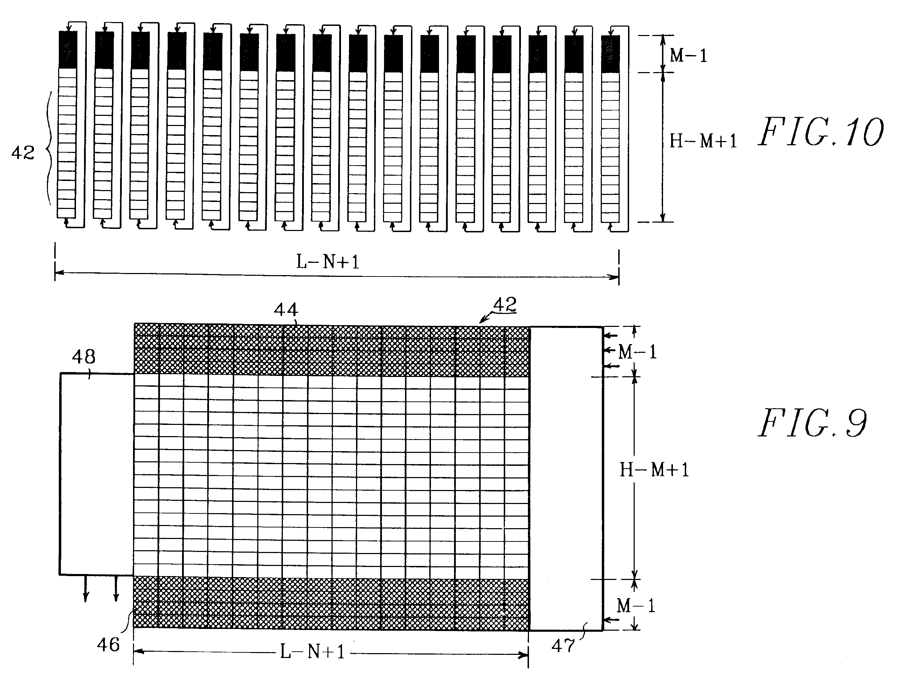

Le module d'estimation de mouvement 10 montré en Figure 9 comprend, en plus de la matrice de (L-N+1)*(H-M+1) processeurs, deux groupes 44 et 46 de registres supplémentaires. Ces registres supplémentaires sont destinés à recevoir les points de la fenêtre de recherche qui sortent de la matrice de processeurs lorsqu'on effectue un décalage vertical : il est alors nécessaire de disposer de (H-M) lignes de chacune (L-M+1) registres à trois entrées, organisés de la même façon que les registres d'entrée 32 de la matrice de processeurs.

Sur la Figure 9, les registres supplémentaires sont regroupés en (H-M) lignes de registres au-dessus des processeurs et (H-M) lignes de registres au-dessous des processeurs. Une autre solution, plus favorable du point de vue du nombre de registres supplémentaires requis, est montrée en Figure 10. Elle consiste à utiliser uniquement la quantité strictement nécessaire de registres supplémentaires (indiqués en grisé) avec un rebouclage à travers la matrice de processeurs 42. Mais cette solution nécessite une plus grande transparence de la matrice de processeurs.

Enfin, le module doit comporter un registre d'entrée général 47 à droite de la matrice de processeurs et une unité de calcul du minimum 48 à gauche de la matrice, dans le cas des décalages envisagés plus haut.

Le registre général d'entrée fonctionne comme les registres 32 et l'unité de calcul du minimum 48 peut avoir une constitution similaire à celle montrée en Figure 8, mais pour remplir la fonction illustrée en Figure 5.

Le séquencement des différents composants du circuit de traitement décrit ci-dessus est très simple, puisqu'il suffit de quatre signaux de synchronisation, utilisés directement ou combinés avec le signal général d'horloge du circuit, fourni par une horloge locale, non représentée.

La Figure 11 montre la répartition dans le temps de ces quatre signaux par rapport au signal d'horloge, représentée à la ligne supérieure.

Le signal de remise à zéro RST indique le début d'un calcul : il commande le transfert des résultats du calcul déjà effectué pour le bloc précédent, à partir du circuit de calcul du minimum. Il est donc équivalent au signal $T_0$ montré en Figure 8.

Le signal de décalage horizontal vers la gauche S-HOR provoque le décalage horizontal vers la gauche des points de la fenêtre de recherche et provoque les déplacements au cours des cycles 0 et 2. Ce signal indique donc le départ du traitement d'une nouvelle colonne et est en phase avec le traitement du premier pixel d'une colonne.

Le signal de décalage vertical vers le haut S-UP provoque les décalages nécessaires pendant M-1 cycles pour effectuer les calculs correspondant aux M-1 pixels restant dans une colonne parcourue du haut vers le bas.

Le signal de décalage vertical vers le bas S-DOWN joue un rôle identique pour une colonne parcourue du bas vers le haut.

Les signaux de décalage vertical vers le haut S-UP et vers le bas S-DOWN des points de la fenêtre de recherche interviennent alternativement, et chacun avec une durée de M-1 cycles.

La séquence élémentaire de 2M cycles est donc constituée , dans l'ordre, de: un cycle de décalage horizontal, activé par S-HOR; suivi de M-1 cycles de décalages vers le haut, activés par S-UP; suivis de un cycle de décalage horizontal, activé par S-HOR; suivi de M-1 cycles de décalages vers le bas, activés par S-DOWN.

L'invention est susceptible d'être implémentée en utilisant les technologies CMOS classiques. Pour un circuit d'estimation de mouvement fonctionnant à la cadence pixel pour des déplacements maximum de -8 pixels à +7 pixels dans le sens vertical et horizontal, soit en tout 256 vecteurs déplacements possibles. Le nombre de transistors serait de 380 000. Pour réduire ce nombre, il est possible de faire fonctionner un même processeur en temps partagé entre plusieurs calculs de distorsion, à condition de multiplier la fréquence de fonctionnement interne.

Si par exemple un même processeur traite n calculs de distorsion, la fréquence de l'horloge interne de cadencement du processeur doit être multipliée par n et le schéma de la Figure 8 devient celui de la Figure 12.

Cette technique est intéressante car la fréquence de fonctionnement maximum autorisée par les technologies CMOS actuelles est beaucoup plus élevée que les cadences pixels de la plupart des applications.

Par exemple, un rapport 2/1 entre la fréquence de fonctionnement et la cadence pixel permet de réduire à 240 000 le nombre de transistors du circuit proposé ci-dessus.

## Revendications

1. Procédé de traitement de signal bidimensionnel représentant des images animées représentées par des pixels, comprenant les étapes suivantes :
   - on découpe l'image courante en blocs représentant chacun N colonnes de M pixels,
   - on détermine la distorsion globale entre chacun des blocs de l'image courante à son tour et chacun des blocs de même taille dans une fenêtre de recherche à H lignes et L colonnes dans l'image précédente, fenêtre contenant ledit bloc de l'image courante, les calculs servant à cette détermination de distorsion étant en partie exécutés en parallèle, et
   - on détermine celui des blocs de la fenêtre de recherche de l'image précédente qui a la moindre distorsion par rapport au bloc de l'image courante, et on mémorise les coordonnées de ce bloc dans la fenêtre de recherche,
   caractérisé en ce que les pixels de l'image sont obtenus par balayage par colonne de bandes de hauteur égale à une fraction entière de la hauteur de l'image, en ce que M est un multiple simple, éventuellement égal à 1, du nombre de pixels sur la hauteur d'une bande et N est une fraction entière du nombre de colonnes par image, et en ce que la détermination de la distorsion globale entre un bloc de l'image courante et un bloc de la fenêtre de recherche est effectuée en M.N cycles par calcul en parallèle, au cours de chaque cycle, de toutes les distorsions partielles entre un pixel déterminé du bloc courant et chacun des pixels susceptibles de lui correspondre par déplacement du bloc dans la fenêtre de recherche de l'image précédente, le cycle étant répété pour chaque pixel du bloc à son tour.

2. Procédé selon la revendication 1, caractérisé en ce que chaque distorsion partielle est mesurée par une fonction à deux arguments pouvant être la valeur absolue ou le carré de la différence des valeurs du pixel de l'image courante et du pixel de l'image précédente qui lui est comparé, la moindre distorsion correspondant à un extremum.

3. Procédé selon la revendication 1 ou 2, caractérisé en ce que les bandes ont une hauteur égale à M ou M/2 et en ce que H = 2M.

4. Circuit de traitement par bloc de signal bidimensionnel d'images animées, chaque image étant représentée par des pixels et étant découpée en blocs de pixels ayant chacun M lignes et N colonnes, permettant, pour chaque bloc d'une image courante, de déterminer, parmi les blocs de même taille compris dans une fenêtre de recherche à H lignes et L colonnes d'une image précédente, fenêtre contenant ledit bloc de l'image courante, le bloc qui présente la meilleure correspondance avec ledit bloc de l'image courante, caractérisé en ce que les pixels de l'image étant obtenus par balayage par colonne de bandes de hauteur égale à une fraction entière de l'image, M étant un multiple simple, éventuellement égal à 1 du nombre de pixels sur la hauteur d'une bande, et N étant une fraction entière du nombre de colonnes par image, le circuit de traitement comprend :

- une matrice de (H-M+1) lignes de chacune (L-N+1) processeurs (24, 32, 34),
- des premiers moyens pour distribuer à tous les processeurs une donnée représentative d'un même pixel du bloc de l'image courante pendant un même cycle et pour remplacer la donnée relative à un pixel par la donnée relative à un autre pixel du bloc lors du passage d'un cycle au suivant, jusqu'à exécution de MxN cycles,
- des seconds moyens pour appliquer à chaque processeur, au cours des cycles successifs, des données représentatives de pixels de la fenêtre de recherche présentant toujours le même décalage par rapport à la position du pixel du bloc de l'image courante distribué au cours du cycle, chacun des processeurs étant prévu pour calculer une distorsion partielle pour un pixel au cours d'un cycle et pour totaliser, au fur et à mesure des cycles, les distorsions partielles pour tous les pixels du bloc de l'image courante pour un des déplacements possibles et pour mémoriser la valeur cumulée,
- et des moyens pour déterminer, par comparaison entre les valeurs cumulées, le bloc de la fenêtre de recherche ayant la meilleure correspondance avec le bloc de l'image courante.

5. Circuit selon la revendication 4, caractérisé en ce que les seconds moyens sont prévus pour faire progresser simultanément tous les pixels de l'image précédente dans la matrice suivant un trajet tel qu'à l'issue de MxN cycles, chaque processeur ait cumulé la totalité des distorsions partielles pour un déplacement déterminé.

6. Circuit selon la revendication 4 ou 5, caractérisé en ce que les moyens pour déterminer la meilleure correspondance comportent une colonne d'opérateurs fonctionnant en autant de cycles qu'il y a de déplacements possibles en ligne pour déterminer celui des déplacements en ligne qui correspond au minimum de distorsion et pour mémoriser le vecteur-déplacement correspondant, et des moyens fonctionnant en autant de cycles qu'il y a de déplacements possibles en colonne pour déterminer le vecteur-déplacement correspondant au minimum minimorum de distorsion.

7. Circuit selon la revendication 6, caractérisé en ce que chaque processeur comporte un circuit de calcul de distorsion (24), un registre d'entrée (32) et un registre de sortie (34), les registres de sortie étant interconnectés pour permettre la détermination de la meilleure correspondance.

8. Circuit selon la revendication 7, caractérisé en ce que le circuit de calcul comporte un organe de calcul de distorsion partielle et un additionneur-accumulateur (28, 30).

9. Circuit selon la revendication 8, caractérisé en ce que les seconds moyens comprennent un registre général (47) d'entrée dans la matrice, comportant K entrées, K étant un entier égal ou supérieur à M/H, l'une des entrées recevant directement les pixels correspondant à l'image précédente, tandis que les autres entrées reçoivent les pixels par l'intermédiaire de lignes successives à retard, chaque ligne fournissant un retard correspondant à une ligne de blocs.

## Patentansprüche

1. Verfahren zur Verarbeitung eines zweidimensionalen Signals, welches durch Punkte repräsentierte bewegliche Bilder darstellt, mit folgenden Schritten:
   - man schneidet das laufende Bild in Blöcke, welche jeweils N Reihen von M Punkten darstellen,
   - man bestimmt die Gesamtverzerrung zwischen jedem der Blöcke des laufenden Bildes auf seinem Umlauf und jedem der Blöcke derselben Größen in einem Untersuchungsfenster mit H Linien und L Reihen in dem vorangehenden Bild, wobei das Fenster den Block des laufenden Bildes enthält, wobei die Berechnungen, die zur Bestimmung der Verzerrung dienen, teilweise parallel ausgeführt werden, und

- man bestimmt denjenigen der Blöcke des Untersuchungsfenster des vorangehenden Bildes, welcher im Verhältnis zum Block des laufenden Bildes die geringste Verzerrung aufweist, und man speichert die Koordinaten dieses Blockes im Untersuchungsfenster,
dadurch gekennzeichnet,
daß die Punkte des Bildes pro Reihe durch Umkehrung von Streifen einer Höhe, die gleich einem ganzen Teil der Höhe des Bildes ist, erhalten werden, daß M ein ungeteiltes Vielfaches, eventuell gleich 1, der Anzahl der Punkte auf der Höhe eines Streifens und N ein ganzer Teil der Anzahl von Reihen durch das Bild ist, und daß die Bestimmung der Gesamtverzerrung zwischen einem Block des laufenden Bildes und einem Block des Untersuchungsfensters in M.N Zyklen durch parallele Berechnung im Laufe jedes Zyklus von allen partiellen Verzerrungen zwischen einem bestimmten Punkt des laufenden Blockes und jedem der Punkte bewirkt wird, die geeignet sind, diesem durch Verschiebung des Blockes in das Untersuchungsfenster des vorangehenden Bildes zu entsprechen, wobei der Zyklus für jeden Punkt des Blockes auf seinem Umlauf wiederholt wird.

2. Verfahren nach Anspruch 1,
dadurch gekennzeichnet,
daß jede partielle Verzerrung durch eine Funktion mit zwei Variablen gemessen wird, welche der absolute Wert oder das Quadrat der Differenz der Werte des Punktes des laufenden Bildes und des Punktes des vorangehenden Bildes sein können, das mit ihm verglichen wird, wobei die geringste Verzerrung einem Extremwert entspricht.

3. Verfahren nach Anspruch 1 oder 2,
dadurch gekennzeichnet,
daß die Streifen eine Höhe gleich M oder M/2 aufweisen, und
daß H = 2M ist.

4. Schaltung zur Blockverarbeitung eines zweidimensionalen Signals beweglicher Bilder, wobei jedes Bild durch Punkte dargestellt ist und in Blöcke von Punkten aufgeteilt ist, welche jeweils M Linien und N Reihen aufweisen, was es erlaubt, für jeden Block eines laufenden Bildes unter den Blöcken mit gleicher Größe, welche in einem Untersuchungsfenster mit H Linien und L Reihen eines vorangehenden Bildes enthalten sind, wobei das Fenster den Block des laufenden Bildes enthält, den Block zu bestimmen, der die beste Übereinstimmung mit dem Block des laufenden Bildes aufweist,
dadurch gekennzeichnet,
daß die Punkte des Bildes pro Reihe durch Umkehrung von Streifen einer Höhe, die gleich einem ganzen Teil des Bildes ist, erhalten werden, wobei M ein ungeteiltes Vielfaches, eventuell gleich 1, der Anzahl der Punkte auf der Höhe eines Streifens und N ein ganzer Teil der Anzahl von Reihen durch das Bild ist, wobei die Verarbeitungsschaltung aufweist:
   - eine Matrix von (H-M+1) Linien jedes (L-N+1) Prozessors (24,32,34),
   - erste Mittel zur Verteilung von Daten, die repräsentativ für einen selben Punkt des Blockes des laufenden Bildes während eines selben Zyklus sind, auf alle Prozessoren und zum Ersetzen der Daten relativ zu einem Punkt durch die Daten relativ zu einem anderen Punkt des Blockes während des Fortgehens des folgenden Zyklus bis zur Ausführung von M x N Zyklen,
   - zweite Mittel, zur Anwendung von Daten auf jeden Prozessor während der nachfolgenden Zyklen, wobei die Daten repräsentativ für Punkte des Untersuchungsfensters sind, das immer die gleiche Abweichung im Verhältnis zur Position des Punktes des Blockes des laufenden Bildes verteilt im Laufe des Zyklus, ist, wobei jeder Prozessor vorgesehen ist, um eine partielle Verzerrung für einen Punkt im Laufe eines Zyklus zu berechnen und um der Reihe nach im Laufe der Zyklen die partiellen Verzerrungen für alle Punkte des Blockes des laufenden Bildes für eine der möglichen Verschiebungen zu addieren und den angehäuften Wert zu speichern,
   - und Mittel zur Bestimmung des Blockes, des Überprüfungsfensters, welches die beste Übereinstimmung mit dem Block des laufenden Fensters hat, durch Vergleich zwischen den angehäuften Werten.

5. Schaltung nach Anspruch 4,
dadurch gekennzeichnet,
daß die zweiten Mittel vorgesehen sind, um alle Punkte des vorangehenden Bildes in der Matrix entlang einer Bahn so wie beim Ausgang der M x N Zyklen, fortschreiten zu lassen, wobei jeder Prozessor die Gesamtheit der partiellen Verzerrungen für eine vorbestimmte Verschiebung angehäuft hat.

EP 0 369 854 B1

**6.** Schaltung nach Anspruch 4 oder 5,
dadurch gekennzeichnet,
daß die Mittel zur Bestimmung der besten Übereinstimmung eine Reihe von Operatoren, welche in ebenso vielen Zyklen funktionieren, wie es mögliche Verschiebungen in der Linie gibt, um diejenige der Verschiebungen in der Linie zu bestimmen, die mit dem Minimum der Verzerrung übereinstimmt, und um den entsprechenden Verschiebungsvektor zu speichern und Mittel aufweisen, die in ebenso vielen Zyklen, wie es mögliche Verschiebungen in der Reihe gibt, funktionieren, um den Verschiebungsvektor zu bestimmen, der mit dem Minimum der Minima der Verzerrung übereinstimmt.

**7.** Schaltung nach Anspruch 6,
dadurch gekennzeichnet,
daß jeder Prozessor eine Schaltung zur Berechnung der Verzerrung (24), ein Eingangsregister (32) und ein Ausgangsregister (34) aufweist, wobei die Ausgangsregister verbunden sind, um die Bestimmung der besten Übereinstimmung zu erlauben.

**8.** Schaltung nach Anspruch 7,
dadurch gekennzeichnet,
daß die Berechnungsschaltung ein Organ zur Berechnung der partiellen Verzerrung und einen Zählakkumulator (28,30) aufweist.

**9.** Schaltung nach Anspruch 8,
dadurch gekennzeichnet,
daß die zweiten Mittel ein allgemeines Register (47) zum Eingang in die Matrix mit K Eingängen aufweisen, wobei K ganzzahlig gleich oder oberhalb von M/H ist, wobei einer der Eingänge direkt die mit dem vorangehenden Bild übereinstimmenden Punkte empfängt, während die anderen Eingänge die Punkte durch Zwischenschaltung aufeinanderfolgender Linien mit Verzögerung empfangen, wobei jede Linie eine Verzögerung liefert, die einer Linie der Blöcke entspricht.

**Claims**

**1.** A method for processing a two-dimensional signal representative of animated images represented by pixels, comprising the steps of:
- dividing the current image into blocks, each representing N columns of M pixels,
- determining the global distortion between each of the blocks of the current image, in turn, and each of the blocks having the same size within a search window of H lines and L columns in the preceding image, said window containing said block of the current image, the computations used in such determination of distortion being partly carried out in parallel, and
- determining the one of the blocks of the search window in the preceding image which has the least distortion with respect to the block of the current image, and storing the coordinates of said block in the search window,
    characterized in that the pixels of the image are obtained by scanning by columns bands having a height equal to a whole fraction of the height of the image, in that M is a simple multiple, which may be equal to 1, of the number of pixels in the height of a band and N is a whole fraction of the number of columns per image, and in that determining the global distortion between a block of the current image and a block of the search window is carried out in M∗N cycles through a parallel computation, during each cycle, of all the partial distortions between a determined pixel of the current block and each of the pixels that may correspond thereto by shifting the block in the search window of the preceding image, the cycle being repeated for each pixel of the block, in turn.

**2.** A method according to claim 1, characterized in that each partial distortion is measured by a two-argument function which can be the absolute value or the square of the difference between the values of the pixel of the current image and of the pixel of the preceding image to which it is compared, the least distortion corresponding to an extremum.

**3.** A method according to claim 1 or 2, characterized in that the bands have a height equal to M or M/2, and in that H=2M.

10

4. A circuit for block processing of an animated image two-dimensional signal, each image being represented by pixels and being divided into pixel blocks each having M lines and N columns, which allows, for each block of a current image, to determine, among the blocks of same size included in a search window of H lines and L columns, containing said block of the current image, in a preceding image, the block which best matches said block of the current image, characterized in that the pixels of the image are obtained by scanning by columns bands of height equal to a whole fraction of the image, M being a simple multiple, which may be equal to 1, of the number of pixels in the height of a band, and N being a whole fraction of the number of columns per image, the processing circuit comprises:
   - a matrix of (H-M+1) lines each having (L-N+1) processors (24,32,34),
   - first means for distributing to all the processors a datum representative of a single pixel of the block of the current image during a single cycle, and for replacing the datum representative of a pixel by the datum representative of another pixel of the block upon passing from one cycle to the next one, until MxN cycles are carried out,
   - second means for applying to each processor, during successive cycle, data representative of pixels of the search window which always have the same shift with respect to the position of the pixel of the block of the current image distributed during the cycle, each of the processors being arranged for calculating a partial distortion for a pixel during a cycle and for summing, as the cycles proceed, the partial distortions for all the pixels of the block of the current image for one of the possible shifts and for storing the accumulated value,
   - and means for determining, by a comparison between the accumulated values, the block of the search window which best matches the block of the current image.

5. A circuit according to claim 4, characterized in that the second means are arranged for causing all the pixels of the preceding image to proceed simultaneously in the matrix along such a path that, after MxN cycles, each processor has accumulated all the partial distortions for a determined shift.

6. A circuit according to claim 4 or 5, characterized in that the means for determining the best matching comprise a column of operators which operate in a number of cycles equal to the number of possible line shifts for determining the one of the line shifts which corresponds to the minimum distortion, and for storing the corresponding shift vector, and means operating in a number of cycles equal to the number of possible column shifts for determining the shift vector corresponding to the minimum minimorum distortion.

7. A circuit according to claim 6, characterized in that each processor includes a distortion computation circuit (24), an input register (32) and an output register (34), the output registers being interconnected so as to allow for the determination of the best matching.

8. A circuit according to claim 7, characterized in that the computation circuit has a partial distortion computing unit and adder-accumulator means (28,30).

9. A circuit according to claim 8, characterized in that the second means include a general input register (47) in the matrix, having K inputs, K being an integer equal or greater than M/H, wherein one of the inputs directly receives the pixels corresponding to the preceding image, whereas the other inputs receive the pixels through successive delay lines, each line providing a delay which corresponds to a line of blocks.

*FIG.1*

*FIG.2*

*FIG.3*

12

## $FIG.\,4A$

$|Y0,0-X0,0|$   $|Y0,1-X0,0|$   $|Y0,2-X0,0|$

$|Y1,0-X0,0|$   $|Y1,1-X0,0|$   $|Y1,2-X0,0|$

$|Y2,0-X0,0|$   $|Y2,1-X0,0|$   $|Y2,2-X0,0|$

CYCLE 0

| | | | |
|---|---|---|---|
| Y0,0 | Y0,1 | Y0,2 | Y0,3 |
| Y1,0 | Y1,1 | Y1,2 | |
| Y2,0 | Y2,1 | Y2,2 | Y2,3 |
| Y3,0 | Y3,1 | Y3,2 | |

← Y0,1
← X0,0
← Y2,3
←

## $FIG.\,4B$

$|Y1,0-X1,0|$   $|Y1,1-X1,0|$   $|Y1,2-X1,0|$
$+|Y0,0-X0,0|$   $+|Y0,1-X0,0|$   $+|Y0,2-X0,0|$

$|Y2,0-X1,0|$   $|Y2,1-X1,0|$   $|Y2,2-X1,0|$
$+|Y1,0-X0,0|$   $+|Y1,1-X1,0|$   $+|Y1,2-X1,0|$

$|Y3,0-X1,0|$   $|Y3,1-X1,0|$   $|Y3,2-X1,0|$
$+|Y2,0-X0,0|$   $+|Y2,1-X0,0|$   $+|Y2,2-X0,0|$

CYCLE 1

| | | | |
|---|---|---|---|
| Y0,0 | Y0,1 | Y0,2 | Y0,3 |
| Y1,0 | Y1,1 | Y1,2 | Y1,3 |
| Y2,0 | Y2,1 | Y2,2 | Y2,3 |
| Y3,0 | Y3,1 | Y3,2 | Y3,3 |

← Y1,3
← X1,0
← Y3,3
↑ f1

## $FIG.\,4C$

$|\,Y1,1-X1,1|$   $|Y1,2-X1,1|$   $|Y1,3-X1,1|$
$+|\,Y1,0-X1,0|$   $+|\,Y1,1-X1,0|$   $+|\,Y1,2-X1,0|$
$+|Y0,0-X0,0|$   $+|Y0,1-X0,0|$   $+|Y0,2-X0,0|$

$|\,Y2,1-X1,1|$   $|Y2,2-X1,1|$   $|Y2,3-X1,1|$
$+|Y2,0-X1,0|$   $+|\,Y2,1-X1,0|$   $+|\,Y2,2-X1,0|$
$+|\,Y1,0-X0,0|$   $+|\,Y1,1-X1,0|$   $+|\,Y1,2-X1,0|$

$|\,Y3,1-X1,1|$   $|Y3,2-X1,1|$   $|Y3,3-X1,1|$
$+|\,Y3,0-X1,0|$   $+|\,Y3,1-X1,1|$   $+|\,Y3,2-X1,1|$
$+|Y2,0-X0,0|$   $+|\,Y2,1-X0,0|$   $+|\,Y2,2-X0,0|$

CYCLE 2

| | | | |
|---|---|---|---|
| Y0,1 | Y0,2 | Y0,3 | |
| Y1,1 | Y1,2 | Y1,3 | Y1,4 |
| Y2,1 | Y2,2 | Y2,3 | |
| Y3,1 | Y3,2 | Y3,3 | Y3,4 |
| | | | |

← Y1,4
← X1,1
← Y1,4
← f2

## $FIG.\,4D$

$|\,Y0,1-X0,1|$   $|Y0,2-X0,1|$   $|Y0,3-X0,1|$
$+|\,Y1,1-X1,1|$   $+|\,Y1,2-X1,1|$   $+|Y1,3-X1,1|$
$+|\,Y1,0-X1,0|$   $+|\,Y1,1-X1,0|$   $+|Y1,2-X1,0|$
$+|Y0,0-X0,0|$   $+|\,Y0,1-X0,0|$   $+|Y0,2-X0,0|$

$|\,Y1,1-X0,1|$   $|Y1,2-X0,1|$   $|Y1,3-X0,1|$
$+|\,Y2,1-X1,1|$   $+|Y2,2-X1,1|$   $+|Y2,3-X1,1|$
$+|Y2,0-X1,0|$   $+|Y2,1-X1,0|$   $+|Y2,2-X1,0|$
$+|Y1,0-X0,0|$   $+|Y1,1-X1,0|$   $+|Y1,2-X1,0|$

$|\,Y2,1-X0,1|$   $|Y2,2-X0,1|$   $|Y2,3-X0,1|$
$+|\,Y3,1-X1,1|$   $+|Y3,2-X1,1|$   $+|Y3,3-X1,1|$
$+|Y3,0-X1,0|$   $+|\,Y3,1-X1,1|$   $+|Y3,2-X1,1|$
$+|Y2,0-X0,0|$   $+|Y2,1-X0,0|$   $+|Y2,2-X0,0|$

CYCLE 3

| | | | |
|---|---|---|---|
| | | | |
| Y0,1 | Y0,2 | Y0,3 | Y0,4 |
| Y1,1 | Y1,2 | Y1,3 | Y1,4 |
| Y2,1 | Y2,2 | Y2,3 | Y2,4 |
| Y3,1 | Y3,2 | Y3,3 | Y3,4 |

← Y0,4
← X0,1
← Y2,4
↓ f3

## FIG.5

## FIG.6

## FIG.7

## FIG.11

FIG.8

FIG.12

$FIG.10$

42

M−1

H−M+1

L−N+1

44    42

48

M−1

H−M+1

M−1

46    L−N+1    47

$FIG.9$